# EUROPÄISCHE PATENTSCHRIFT

(11) **EP 2 332 313 B1**
(45) Veröffentlichungstag und Bekanntmachung des Hinweises auf die Patenterteilung: **27.04.2016**
(21) Anmeldenummer: 09782622.6
(22) Anmeldetag: 04.09.2009
(51) Int. Cl.: H04L 29/06, H04L 12/22, G06F 21/34, H04L 9/32

(54) **VERFAHREN ZUR SPEICHERUNG VON DATEN, COMPUTERPROGRAMMPRODUKT, ID-TOKEN UND COMPUTERSYSTEM**
METHOD FOR STORING DATA, COMPUTER PROGRAM PRODUCT, ID TOKEN AND COMPUTER SYSTEM
MÉTHODE DE MÉMORISATION DE DONNÉES, PRODUIT LOGICIEL, JETON D'IDENTIFICATION ET SYSTÈME D'ORDINATEUR

(30) Priorität: 22.09.2008 DE 102008042262; 02.10.2008 DE 102008042582
(43) Veröffentlichungstag der Anmeldung: 15.06.2011
(73) Patentinhaber: Bundesdruckerei GmbH, 10958 Berlin (DE)
(72) Erfinder: FISCHER, Jörg, 13053 Berlin (DE); DIETRICH, Frank, 12437 Berlin (DE); PAESCHKE, Manfred, 16348 Wandlitz (DE)
(74) Vertreter: Richardt Patentanwälte PartG mbB
(86) Internationale Anmeldenummer: PCT/EP2009/061471
(87) Internationale Veröffentlichungsnummer: WO 2010/031698

(56) Entgegenhaltungen:
- EP-A1- 1 802 155
- US-A1- 2005 071 282
- US-A1- 2008 083 827

## Beschreibung

Die Erfindung betrifft ein Verfahren zur Speicherung von Daten, ein Computerprogrammprodukt, ein ID-Token, insbesondere ein Wert- oder Sicherheitsdokument, sowie ein Computersystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

In der zum Anmeldezeitpunkt unveröffentlichten Patentanmeldung DE 2008000067.1-31 derselben Anmelderin ist ein Verfahren zum Lesen zumindest eines in einem ID-Token gespeicherten Attributs offenbart, wobei sowohl eine Authentifizierung des Nutzers als auch eines Computersystems gegenüber dem ID-Token erforderlich ist, um einen Lesezugriff auf ein in den ID-Token gespeichertes Attribut zu ermöglichen, sodass dieses an ein Computersystem zur Erbringung eines Dienstes weitergeleitet werden kann.

Aus US 2003/0023858 A1 ist ein Verfahren zur Generierung eines Datensatzes bekannt, der als elektronischer Reisepass dienen soll. Der Datensatz wird von einem Nutzer heruntergeladen und zum Beispiel auf einem Mobiltelefon gespeichert.

Aus der EP 1802155 ist ein Verfahren zur Authentifizierung eines Nutzers bekannt. Das Verfahren beinhaltet das Senden einer Authentisierungsanfrage zu einem Authentisierungsgerät sowie die Generierung einer ersten Authentisierungsinformation. Ein mobiles Gerät des Nutzers empfängt diese Information und generiert in Abhängigkeit von der ersten Authentisierungsinformation eine zweite Authentisierungsinformation. Die zweite Authentisierungsinformation wird zu dem Authentisierungsgerät gesendet und validiert. Im Falle einer erfolgreichen Validierung wird ein Authentifizierungssignal generiert.

Aus der US 2005/071282 A ist ein System und zugehöriges Verfahren zur Ermöglichung sicherer Transaktionen über ein Computernetzwerk bekannt, welches Identitätsdiebstahl auf nicht-vertrauenswürdigen Computern verhindern soll. Ein mit dem Netzwerk verbundener Client-Computer stellt eine Benutzeroberfläche für einen Benutzer sowie eine sichere Verbindung zur Übertragung vertraulicher Informationen des Nutzers an einen Server-Computer bereit.

Aus der US 2008/083827 A1 ist ein Sicherheitsverfahren zur Verwendung in einem Kommunikationsterminal bekannt. Das Verfahren beinhaltet die Schritte der Bereitstellung einer ersten Karte, der Kombination der ersten mit einer zweiten Karte zu einer Dual-Card, Initialisierung der ersten oder zweiten Karte sowie einen Verifikationsschritt, welcher dafür sorgt, dass die Dual-Card deaktiviert wird, wenn der Verifikationsschritt ergibt, dass z.B. die erste oder zweite Karte durch eine andere ersetzt wurde.
Der Erfindung liegt demgegenüber die Aufgabe zugrunde, ein verbessertes Verfahren zur Speicherung von Daten zu schaffen sowie ein entsprechendes Computerprogrammprodukt, einen ID-Token und ein Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Nach Ausführungsformen der Erfindung wird ein Verfahren zur Speicherung von Daten geschaffen. Eine erste Verbindung wird zwischen einem ersten ID-Token und einem ersten Computersystem über ein zweites Computersystem aufgebaut. Bei dem ersten Computersystem kann es sich um ein Server-Computersystem handeln, welches im Weiteren auch als ID-Provider-Computersystem bezeichnet wird, und welches mit dem zweiten Computersystem über ein Netzwerk, wie zum Beispiel das Internet, verbunden ist. Bei dem zweiten Computersystem kann es sich um einen Personal Computer (PC) eines Nutzers handeln, welches im Weiteren auch als Nutzer-Computersystem bezeichnet wird. Von dem ersten Computersystem wird über die erste Verbindung aus dem ersten ID-Token zumindest ein erstes Attribut ausgelesen.

Ferner wird eine zweite Verbindung zwischen einem zweiten ID-Token und dem ersten Computersystem über das zweite Computersystem aufgebaut, um zumindest ein zweites Attribut aus dem zweiten ID-Token auszulesen. Hierzu kann das zweite Computersystem von dem ersten Computersystem ein Kommando empfangen, wonach zu den ersten und zweiten ID-Token jeweils eine Verbindung aufgebaut werden soll, also eine sogenannte Multi-Session stattfinden soll. Dadurch wird vermieden, dass das zweite Computersystem die erste Verbindung unterbricht, nachdem die ersten Attribute aus dem ersten ID-Token ausgelesen worden sind.

Die ersten und zweiten Attribute werden von dem ersten Computersystem an ein drittes Computersystem gesendet. Bei dem dritten Computersystem kann es sich um ein Server-Computersystem handeln, welches mit dem ersten und/oder dem zweiten Computersystem über das Netzwerk verbunden ist. Bei dem dritten Computersystem kann es sich um ein Server-Computersystem eines Diensteerbringers handeln, welches im Weiteren auch als Dienst-Computersystem bezeichnet wird. Vorzugsweise werden die ersten und zweiten Attribute von dem ersten Computersystem vor Weiterleitung an das dritte Computersystem digital signiert, sodass das dritte Computersystem die Vertrauenswürdigkeit der ersten und zweiten Attribute prüfen kann.

Vorzugsweise werden die ersten Attribute von dem ersten Computersystem an das dritte Computersystem unmittelbar nach dem Auslesen aus dem ersten ID-Token weitergeleitet, sodass das erste Attribut von dem ersten Computersystem nicht permanent gespeichert zu werden braucht. Es reicht dagegen aus, das erste Attribut in dem ersten Computersystem nur so lange zu speichern, wie es erforderlich ist, um das erste Attribut an das dritte Computersystem weiterzuleiten, nachdem es aus dem ersten ID-Token ausgelesen worden ist. Ebenso wird vorzugsweise bezüglich des zweiten Attributs verfahren, welches ebenfalls von dem ersten Computersystem unmittelbar nach dem Auslesen aus dem zweiten ID-Token an das dritte Computersystem weitergeleitet wird. Eine für die Zwecke der Weiterleitung der Attribute von dem ersten Computersystem an das dritte Computersystem eventuell erforderliche temporäre Kopie der ersten bzw. zweiten Attribute wird von dem ersten Computersystem unmittelbar nach dem Senden gelöscht. Dies hat den Vorteil, dass das erste Computersystem zustandslos ausgebildet sein kann, und dass schutzbedürftige Daten, welche die ersten und zweiten Attribute beinhalten können, nicht von dem ersten Computersystem gesammelt werden.

Das dritte Computersystem verwendet die von dem ersten Computersystem empfangenen ersten und zweiten Attribute zur Ermittlung von Daten. Dies kann so erfolgen, dass das dritte Computersystem aus den ersten und zweiten Attributen die Daten berechnet oder durch Zugriff auf eine Datenbank mit Hilfe der ersten und zweiten Attribute die Daten aus einer Datenbank abfragt. Das erste Computersystem empfängt dann die Daten von dem dritten Computersystem, beispielsweise über das Netzwerk. Die Übertragung der Daten von dem dritten Computersystem an das erste Computersystem erfolgt vorzugsweise über eine gesicherte Verbindung.

Das erste Computersystem schreibt dann Daten in den zweiten ID-Token über die zweite Verbindung, um die Daten in dem zweiten ID-Token zu speichern. Voraussetzung hierfür ist, dass auch die erste Verbindung zu dem ersten ID-Token noch besteht, und zwar während der gesamten Zeitdauer des Schreibvorgangs. Hierdurch wird sichergestellt, dass nicht zwischenzeitlich der Nutzer seine Autorisierung zum Schreiben des ersten ID-Tokens seitens des ersten Computersystems dadurch widerrufen hat, dass er seinen ersten 1D-Token von einem Lesegerät des ersten Computersystems entfernt hat, wodurch die erste Verbindung abbrechen würde. Dadurch, dass das Schreiben der Daten über die zweite Verbindung erfolgt, ist ferner sichergestellt, dass die zweite Verbindung zwischenzeitlich nicht dadurch unterbrochen worden ist, dass der zweite ID-Token durch einen zum Beispiel manipulierten, d.h. gefälschten oder verfälschten ID-Token ersetzt worden ist.

Dies ist dadurch bedingt, dass die ersten und zweiten Verbindungen jeweils mit Hilfe eines verbindungsorientierten Protokolls aufgebaut und aufrechterhalten werden. Ein solches verbindungsorientiertes Protokoll registriert, wenn einer der beiden Teilnehmer der Verbindung entfernt wird. Dadurch kann während der gesamten Zeitdauer zwischen dem Aufbau der ersten Verbindung und dem Aufbau der zweiten Verbindung bis zum Schreiben der Daten die notwendige Bedingung überprüft werden, dass sowohl die erste als auch die zweite Verbindung bis zum Abschluss des Schreibvorgangs nicht abgebrochen werden. Für den Fall, dass doch die erste oder die zweite Verbindung vor Abschluss des Schreibvorgangs abbricht, werden die Daten nicht in dem zweiten ID-Token gespeichert.

Ausführungsformen der Erfindung sind besonders vorteilhaft, da es die Erfindung ermöglicht, den zweiten ID-Token mit dokumentenindividuellen Daten sicher zu beschreiben, wobei der erste ID-Token als "Vertrauensanker" dient. Der Inhaber des ersten ID-Tokens wird dadurch in die Lage versetzt, seinen zweiten ID-Token mit dokumentenindividuellen Daten erstmals beschreiben zu lassen oder solche dokumentenindividuellen Daten zu aktualisieren, und zwar online, ohne dass der Inhaber des ersten ID-Tokens zum Beispiel eine Behörde persönlich aufsuchen muss.

Beispielsweise ist der erste ID-Token dem autorisierten Nutzer, d.h. dem Inhaber des ID-Tokens, zugeordnet. Zum Beispiel handelt es sich bei dem ersten ID-Token um einen elektronischen Personalausweis. Der zweite ID-Token kann dagegen einer Sache zugeordnet sein, wie zum Beispiel einem Kraftfahrzeug. Beispielsweise handelt es sich bei dem zweiten ID-Token um einen elektronischen Kraftfahrzeugbrief oder einen elektronischen Kraftfahrzeugschein. Die Erfindung ermöglich es, den elektronischen Kraftfahrzeugbrief oder Kraftfahrzeugschein online zu aktualisieren, wenn sich zum Beispiel der Halter des Kraftfahrzeugs und/oder das amtliche Kennzeichen des Kraftfahrzeugs ändern.

Unter einem "Dokument," werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung zumindest eines Attributs integriert ist.

Nach einer Ausführungsform der Erfindung handelt es sich bei dem verbindungsorientierten Protokoll der ersten und/oder zweiten Verbindungen um ein paketvermittelndes Transportprotokoll zum Aufbau einer Ende-zu-Ende-Verbindung in Vollduplex, wie zum Beispiel das Transmission Control Protocol (TCP).

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Von besonderem Vorteil ist weiterhin, dass eine zentrale Speicherung der Attribute nicht erforderlich ist. Die Erfindung ermöglicht also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung hat das erste Computersystem zumindest ein Zertifikat, welches zur Authentifizierung des ersten Computersystems gegenüber dem ersten und/oder zweiten ID-Token verwendet wird. Das Zertifikat beinhaltet eine Angabe derjenigen Attribute, für welche das erste Computersystem eine Leseberechtigung hat. Der betreffende ID-Token prüft anhand dieses Zertifikats, ob das erste Computersystem die erforderliche Leseberechtigung für den Lesezugriff auf das erste bzw. zweite Attribut hat, bevor ein solcher Lesezugriff durch das erste Computersystem durchgeführt werden kann.

Nach einer Ausführungsform der Erfindung sendet das erste Computersystem das zumindest eine von dem ID-Token ausgelesene erste bzw. zweite Attribut unmittelbar an das dritte Computersystem. Bei dem dritten Computersystem kann es sich zum Beispiel um einen Server einer Behörde, wie z.B. einer Kraftfahrzeug-Meldestelle handeln.

Nach einer Ausführungsform der Erfindung erfolgt die Übertragung der aus dem ID-Token gelesenen Attribute von dem ersten Computersystem zunächst an das zweite Computersystem des Nutzers. Beispielsweise hat das zweite Computersystem einen üblichen Internetbrowser, mit dem der Nutzer eine Webseite des dritten Computersystems öffnen kann. Der Nutzer kann in die Webseite eine Anforderung für einen Dienst, wie z.B. die Aktualisierung seines elektronischen Kraftfahrzeugscheins, eingeben.

Das dritte Computersystem spezifiziert daraufhin diejenigen Attribute, zum Beispiel des Nutzers und/oder seines ersten und/oder zweiten ID-Tokens, welche es für die Erbringung des Dienstes oder die Annahme der Bestellung benötigt. Die entsprechende Attributspezifikation, die die Spezifizierung dieser Attribute beinhaltet, wird sodann von dem dritten Computersystem an das erste Computersystem gesendet. Dies kann mit oder ohne Zwischenschaltung des zweiten Computersystems erfolgen. Im letzteren Fall kann der Nutzer das gewünschte erste Computersystem gegenüber dem dritten Computersystem spezifizieren, beispielsweise durch Eingabe der URL des ersten Computersystems in eine Webseite des dritten Computersystems von dem zweiten Computersystem aus.

Nach einer Ausführungsform der Erfindung beinhaltet die Dienst-Anforderung des Nutzers an das dritte Computersystem die Angabe eines Identifikators, wobei der Identifikator das erste Computersystem identifiziert. Beispielsweise handelt es sich bei dem Identifikator um einen Link, beispielsweise eine URL des ersten Computersystems.

Nach einer Ausführungsform der Erfindung wird die Attributspezifizierung nicht unmittelbar von dem dritten Computersystem an das erste Computersystem gesendet, sondern zunächst von dem dritten Computersystem an das zweite Computersystem.

Nach einer Ausführungsform der Erfindung werden die aus dem ersten bzw. zweiten ID-Token ausgelesenen Attribute von dem ersten Computersystem signiert und dann an das zweite Computersystem übertragen. Der Nutzer des zweiten Computersystems kann die Attribute also lesen, ohne sie jedoch verändern zu können. Erst nach Freigabe durch den Nutzer werden die Attribute von dem zweiten Computersystem an das dritte Computersystem weitergeleitet.

Nach einer Ausführungsform der Erfindung kann der Nutzer die ersten und/oder zweiten Attribute vor deren Weiterleitung durch weitere Daten ergänzen.

Nach einer Ausführungsform der Erfindung hat das erste Computersystem mehrere Zertifikate mit verschiedenen Leserechten. Aufgrund des Empfangs der Attributspezifikation wählt das erste Computersystem eines oder mehrere dieser Zertifikate aus, um die entsprechenden Attribute aus den ID-Token auszulesen.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.

In einem weiteren Aspekt betrifft die Erfindung einen ID-Token mit einem geschützten Speicherbereich zur Speicherung von zumindest einem Attribut und zur Speicherung von Daten, Mitteln zur Authentifizierung eines ersten Computersystems gegenüber dem ID-Token, Mitteln zum Aufbau einer Verbindung zu dem ersten Computersystem nach einem verbindungsorientierten Protokoll, über die das erste Computersystem das zumindest ein Attribut auslesen kann, wobei eine notwendige Voraussetzung für das Auslesen des zumindest einen Attributs aus dem ID-Token durch das erste Computersystem die erfolgreiche Authentifizierung des ersten Computersystems gegenüber dem ID-Token ist und wobei die Daten über die Verbindung in den Speicherbereich geschrieben werden können.

Beispielsweise handelt es sich bei dem ID-Token um einen elektronischen Fahrzeugbrief, der nur einem Kraftfahrzeug, nicht aber einem Nutzer fest zugeordnet ist. Eine Authentifizierung des Nutzers gegenüber dem ID-Token kann dann entfallen.

Zusätzlich zu der Authentifizierung des ersten Computersystems gegenüber dem ID-Token, wie sie an sich zum Beispiel als so genannte Extended Access Control für maschinenlesbare Reisedokumente (machine-readable travel documents - MRTD) bekannt und von der internationalen Luftfahrtbehörde ICAO spezifiziert ist, kann es ja nach Ausführungsform erforderlich sein, dass sich auch der Nutzer gegenüber dem ID-Token authentifiziert. Beispielsweise wird durch eine erfolgreiche Authentifizierung des Nutzers gegenüber dem ID-Token dieser freigeschaltet, sodass die weiteren Schritte, nämlich die Authentifizierung des ersten Computersystems gegenüber dem ID-Token und/oder der Aufbau einer geschützten Verbindung zum Auslesen der Attribute, ablaufen können.

Nach einer Ausführungsform der Erfindung hat der ID-Token Mittel für eine Ende-zu-Ende-Verschlüsselung. Dies ermöglicht es, die Verbindung zwischen dem ID-Token und dem ersten Computersystem über ein drittes Computersystem des Nutzers aufzubauen, da der Nutzer aufgrund der Ende-zu-Ende-Verschlüsselung keine Änderungen der über die Verbindung übertragenen Daten vornehmen kann.

In einem weiteren Aspekt betrifft die Erfindung ein erstes Computersystem mit Computersystem mit Mitteln zum Aufbau einer ersten Verbindung zwischen einem ersten ID-Token und einem ersten Computersystem über ein zweites Computersystem zum Auslesen zumindest eines ersten Attributs aus dem ersten ID-Token, Mitteln zum Aufbau einer zweiten Verbindung zwischen einem zweiten ID-Token und dem ersten Computersystem über das zweite Computersystem zum Auslesen zumindest eines zweiten Attributs aus dem zweiten ID-Token, Mitteln zum Senden der ersten und zweiten Attribute von dem ersten Computersystem an ein drittes Computersystem, Mitteln zum Empfang der Daten von dem dritten Computersystem durch das erste Computersystem, Mitteln zum Schreiben der Daten von dem ersten Computersystem in das zweite ID-Token über die zweite Verbindung, um die Daten in dem zweiten ID-Token zu speichern, wobei Voraussetzung für das Schreiben der Daten ist, dass auch die erste Verbindung noch besteht, wobei es sich bei den ersten und zweiten Verbindungen jeweils um Verbindungen mit Ende-zu-Ende-Verschlüsselung und mit einem verbindungsorientierten Protokoll handelt.

Nach Ausführungsformen der Erfindung hat das erste Computersystem Mittel zum Empfang einer Attributspezifikation über ein Netzwerk, wobei die Attributspezifikation zumindest ein Attribut spezifiziert, Mittel zur Authentifizierung gegenüber einem ID-Token, Mittel zum Lesen zumindest einen Attributs aus dem ID-Token über eine gesicherte Verbindung, wobei das Lesen des zumindest einen Attributs voraussetzt, dass sich ein dem ID-Token zugeordneter Nutzer gegenüber dem ID-Token authentifiziert hat.

Nach einer Ausführungsform der Erfindung kann das erste Computersystem Mittel zur Generierung einer Aufforderung an den Benutzer beinhalten. Nachdem das erste Computersystem die Attributspezifikation beispielsweise von dem dritten Computersystem empfangen hat, sendet es daraufhin eine Aufforderung an das zweite Computersystem des Nutzers, sodass der Nutzer dazu aufgefordert wird, sich gegenüber dem ersten und/oder zweiten ID-Token zu authentifizieren. Nachdem die Authentifizierung des Nutzers gegenüber dem ersten und/oder zweiten ID-Token erfolgreich durchgeführt worden ist, erhält das erste Computersystem von dem zweiten Computersystem eine Bestätigung. Daraufhin authentifiziert sich das erste Computersystem gegenüber dem betreffenden ID-Token und es wird die sichere erste bzw. zweite Verbindung zwischen dem ID-Token und dem ersten Computersystem mit einer Ende-zu-Ende-Verschlüsselung aufgebaut.

Nach einer Ausführungsform der Erfindung hat das erste Computersystem mehrere Zertifikate, die jeweils unterschiedliche Leserechte und/oder Schreibrechte spezifizieren. Nach Empfang der Attributspezifikation wählt das erste Computersystem zumindest eines dieser Zertifikate mit den zum Lesen der spezifizierten Attribute ausreichenden Leserechten. Ferner wählt das erste Computersystem dasjenige Zertifikat, welches die zum Schreiben der Daten in den zweiten ID-Token erforderlichen Rechte spezifiziert, um seine diesbezügliche Berechtigung gegenüber dem zweiten ID-Token nachzuweisen.

Ausführungsformen des erfindungsgemäßen ersten Computersystems sind besonders vorteilhaft, da sie in Kombination mit der Notwendigkeit der Authentifizierung des Nutzers gegenüber dem ID-Token einen Vertrauensanker für die unverfälschte digitale Identität des Nutzers bilden. Hierbei ist von besonderem Vorteil, dass dies keine vorherige Registrierung des Nutzers gegenüber dem ersten Computersystem erfordert sowie auch keine zentrale Speicherung der die digitalen Identitäten bildenden Attribute der Nutzer.

Nach einer Ausführungsform der Erfindung handelt es sich bei dem ersten Computersystem um ein behördlich zertifiziertes Trust-Center, insbesondere ein Signaturgesetz-konformes Trust-Center.

Im Weiteren werden Ausführungsformen der Erfindung mit Bezugnahme auf die Zeichnungen näher erläutert. Es zeigen:
- Figur 1: ein Blockdiagramm einer Ausführungsform erfindungsgemäßer Computersysteme und ID-Token,
- Figur 2: ein Flussdiagramm einer Ausführungsform eines erfindungsgemäßen Verfahrens,
- Figur 3: ein Blockdiagramm einer weiteren Ausführungsform erfindungsgemäßer Computersysteme und ID-Token,
- Figur 4: ein Flussdiagramm einer weiteren Ausführungsform eines erfindungsgemäßen Verfahrens,
- Figur 5: ein UML-Diagramm einer weiteren Ausführungsform eines erfindungsgemäßen Verfahrens,
- Figur 6: ein Blockdiagramm einer weiteren Ausführungsform erfindungsgemäßer Computersysteme und ID-Token.

Elemente der nachfolgenden Ausführungsformen, die einander entsprechen, werden mit denselben Bezugszeichen gekennzeichnet.

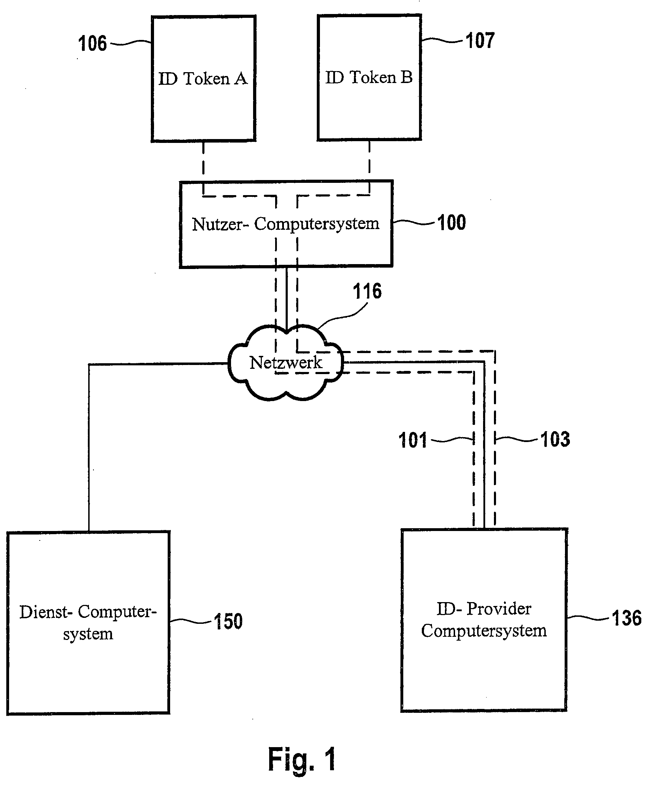

Die Figur 1 zeigt ein Blockdiagramm einer Ausführungsform eines erfindungsgemäßen Datenverarbeitungssystems. Das Datenverarbeitungssystem hat ein Nutzer-Computersystem 100. Bei dem Nutzer-Computersystem 100 kann es sich um einen PC, einen tragbaren Computer, wie zum Beispiel einen Laptop oder Palmtop Computer, einen Personal Digital Assistant (PDA), ein mobiles Telekommunikationsgerät, insbesondere ein Smartphone, oder dergleichen handeln.

Das Nutzer-Computersystem 100 dient zur Kommunikation mit dem ID-Token A 106 und dem ID-Token B 107. Die Kommunikation zwischen den ID-Token A und B einerseits und dem Nutzer-Computersystem 100 andererseits kann kontaktbehaftet oder kontaktlos, insbesondere nach einem RFID-Verfahren, erfolgen. Bei dem ID-Token A kann es sich um einen elektronischen Personalausweis handeln, d.h. einen Personalausweis, welcher einen RFID-Chip beinhaltet, in dem Attribute des Nutzers gespeichert sind.

Der ID-Token B kann prinzipiell so aufgebaut sein wie der ID-Token A, wobei der ID-Token B nicht dem Nutzer, sondern einer Sache, wie zum Beispiel einem Kraftfahrzeug, zugeordnet ist. Beispielsweise handelt es sich bei dem ID-Token B um einen elektronischen Kraftfahrzeugbrief oder einen elektronischen Kraftfahrzeugschein, in dem in dem Attribute des Kraftfahrzeugs gespeichert sind.

An das Nutzer-Computersystem 100 ist ein geeignetes Lesegerät (in der Figur 1 nicht dargestellt) angeschlossen oder in das Nutzer-Computersystem 100 integriert, sodass das Nutzer-Computersystem 100 mit den ID-Token A und B kommunizieren kann. Das Lesegerät ist dabei so ausgebildet, dass gleichzeitig eine erste Verbindung A 101 zwischen dem ID-Token A und dem Nutzer-Computersystem 100 sowie eine zweite Verbindung B 103 zwischen dem ID-Token B und dem Nutzer-Computersystem 100 bestehen kann.

In dem ID-Token B ist zumindest ein Attribut gespeichert, welches die Zuordnung des ID-Tokens B zu der Sache, beispielsweise zu dem Kraftfahrzeug, herstellt. Bei diesem Attribut kann es sich um einen sogenannten Unique Identifier der Sache handeln, wie zum Beispiel die Fahrgestellnummer des Kraftfahrzeugs oder dergleichen.

Das Nutzer-Computersystem 100 ist über ein Netzwerk 116, wie zum Beispiel das Internet, mit einem Dienst-Computersystem 150 verbunden. Bei dem Dienst-Computersystem 150 kann es sich um ein Server-Computersystem einer Behörde, wie zum Beispiel einer Kraftfahrzeugmeldestelle handeln.

Ferner ist das Nutzer-Computersystem 100 über das Netzwerk 116 mit dem ID-Provider-Computersystem 136 verbunden. Das ID-Provider-Computersystem 136 dient zum Lesen der Attribute aus den ID-Token A und B, zur Weiterleitung dieser Attribute an das Dienst-Computersystem 150, zum Empfang von Daten von dem Dienst-Computersystem 150 und für einen Schreibzugriff auf der Basis dieser Daten auf den ID-Token B, um den ID-Token B zu aktualisieren. Bei den Daten kann es sich z.B. um aktualisierte Attributwerte handeln.

Wenn sich zum Beispiel aufgrund eines Umzugs des Nutzers das amtliche Kennzeichen von dessen Kraftfahrzeug ändert, so kann der ID-Token B mit dem neuen amtlichen Kennzeichen wie folgt aktualisiert werden, ohne dass der Nutzer hierzu eine Behörde aufsuchen muss.

Zwischen dem ID-Token A und dem ID-Provider-Computersystem 136 wird eine erste Verbindung A 101 aufgebaut. Bei der Verbindung 101 handelt es sich um eine Verbindung mit Ende-zu-Ende-Verschlüsselung, sodass die über die Verbindung 101 ausgetauschten Daten weder von dem Nutzer-Computersystem 100 noch von anderen Teilnehmern des Netzwerks 116 entschlüsselt werden können. Die Verbindung 101 wird mit Hilfe eines verbindungsorientierten Protokolls aufgebaut und aufrechterhalten.

Analog wird bezüglich des ID-Tokens B vorgegangen: Zwischen dem ID-Token B und dem ID-Provider-Computersystem 136 wird eine zweite Verbindung B 103 aufgebaut, und zwar ebenfalls über das Nutzer-Computersystem 100 und das Netzwerk 116 mit Ende-zu-Ende-Verschlüsselung und ebenfalls mit dem verbindungsorientierten Protokoll.

Das ID-Provider-Computersystem 136 liest über die Verbindung 101 zumindest ein erstes Attribut A aus dem ID-Token A aus oder mehrere solcher Attribute A, durch welche der Nutzer eindeutig identifiziert wird. Beispielsweise kann es sich hierbei um den Namen, das Geburtsdatum und den Wohnort des Nutzers handeln.

Die Attribute A werden von dem ID-Provider-Computersystem 136 digital signiert und an das Dienst-Computersystem 150 weitergeleitet. Dies erfolgt vorzugsweise so, dass das ID-Provider-Computersystem 136 keine Kopie der Attribute A zurückbehält, nachdem die Attribute A mit der Signatur an das Dienst-Computersystem 150 gesendet worden sind.

Ebenso wird hinsichtlich des zweiten Attributs B, welches in dem ID-Token B gespeichert ist, vorgegangen: Das Attribut B, wie zum Beispiel die Fahrgestellnummer, wird von dem ID-Provider-Computersystem 136 über die Verbindung 103 aus dem ID-Token B gelesen, signiert und an das Dienst-Computersystem 150 gesendet. Auch von dem Attribut B wird in dem ID-Provider-Computersystem 136 nach dem Senden an das Dienst-Computersystem 150 vorzugsweise keine Kopie gespeichert.

Das Dienst-Computersystem 150 ermittelt mit Hilfe der Attribute A und des Attributs B das aktualisierte amtliche Kennzeichen des Kraftfahrzeugs, welches durch das Attribut B identifiziert wird. Beispielsweise ermittelt das Dienst-Computersystem 150 dieses neue amtliche Kennzeichen durch eine Datenbankabfrage in einer Datenbank, in der solche Kennzeichen gespeichert sind. Für die Datenbankabfrage können die Attribute A und/oder das Attribut B verwendet werden.

Das Dienst-Computersystem 150 sendet Daten, welche das neue amtliche Kennzeichen beinhalten, an das ID-Provider-Computersystem 136. Vorzugsweise signiert das Dienst-Computersystem 150 die Daten, sodass das ID-Provider-Computersystem 136 diese Signatur prüfen kann, um sich hinsichtlich der Authentizität dieser Daten Sicherheit zu verschaffen.

Die Daten mit dem neuen amtlichen Kennzeichen sendet das ID-Provider-Computersystem 136 dann über die Verbindung 103 an den ID-Token B, sodass das neue amtliche Kennzeichen dort gespeichert wird. Zusätzlich kann das ID-Provider-Computersystem 136 auch die aktualisierte Adresse des Nutzers auf diese Art und Weise in den ID-Token B schreiben. Hierzu kann es erforderlich sein, dass das ID-Provider-Computersystem 136 nochmals über die Verbindung 101 auf den ID-Token A zugreift, um die Attribute mit der geänderten Anschrift auszulesen.

Für einen Schreibzugriff des ID-Provider-Computersystems 136 über die Verbindung 103 auf den ID-Token B ist es eine notwendige Voraussetzung, dass die Verbindung 101 zu dem ID-Token A noch besteht. Hierdurch ist es sichergestellt, dass der "Vertrauensanker" noch vorhanden ist, wenn die Daten, also zum Beispiel das neue amtliche Kennzeichen, in den ID-Token B über die Verbindung 103 geschrieben werden.

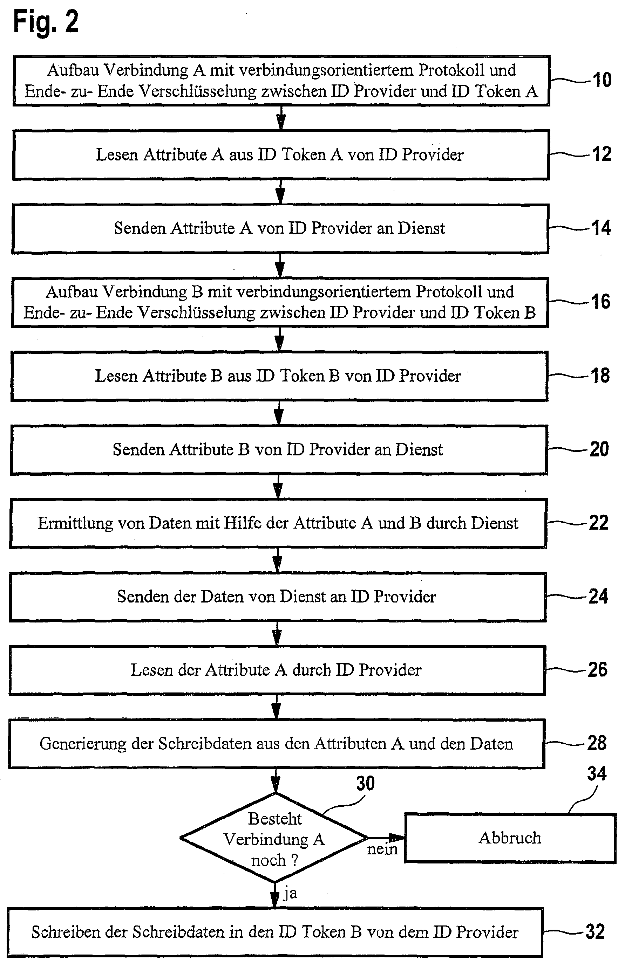

Die Figur 2 zeigt ein entsprechendes Flussdiagramm.

In dem Schritt 10 wird die Verbindung A zwischen dem ID-Provider und dem ID-Token A aufgebaut, und zwar mit einem verbindungsorientierten Protokoll und mit Ende-zu-Ende-Verschlüsselung. In dem Schritt 12 werden die Attribute A aus dem ID-Token A von dem ID-Provider ausgelesen, und zwar über die Verbindung A. Die Attribute A werden dann von dem ID-Provider in dem Schritt 14 an den Dienst weitergeleitet (vgl. ID-Provider-Computersystem 136 und Dienst-Computersystem 150 in der Ausführungsform der Figur 1).

Analog wird in den Schritten 16, 18 und 20 mit Bezug auf den ID-Token B und die in dem ID-Token B gespeicherten Attribute B vorgegangen, welche also ebenfalls von dem Dienst empfangen werden.

In dem Schritt 22 ermittelt der Dienst mit Hilfe der Attribute A und B die Daten, die für die Aktualisierung des ID-Tokens B verwendet werden sollen. Diese Daten können zum Beispiel das amtliche Kennzeichen des Kraftfahrzeugs beinhalten, dem der ID-Token B zugeordnet ist.

In dem Schritt 24 werden diese Daten von dem Dienst an den ID-Provider gesendet. Wenn der ID-Token B auch mit den Attributen A aktualisiert werden soll, so werden diese Attribute A in dem Schritt 26 erneut durch den ID-Provider über die Verbindung A gelesen. In dem Schritt 28 generiert der ID-Provider aus den Attributen A und den von dem Dienst empfangenen Daten Schreibdaten, d.h. einen Datensatz, welcher die in den ID-Token B zu schreibenden Daten beinhaltet.

In dem Schritt 30 prüft der ID-Provider, ob die Verbindung A noch besteht. Wenn dies der Fall ist, werden die Schreibdaten in dem Schritt 32 von dem ID-Provider über die Verbindung B in den ID-Token B geschrieben und dort gespeichert, sodass der ID-Token B aktualisiert ist. Im gegenteiligen Fall bricht der ID-Provider in dem Schritt 34 den Vorgang ab, da ein sicheres Schreiben der Schreibdaten in den ID-Token B aufgrund des Abbrechens der Verbindung A nicht möglich ist.

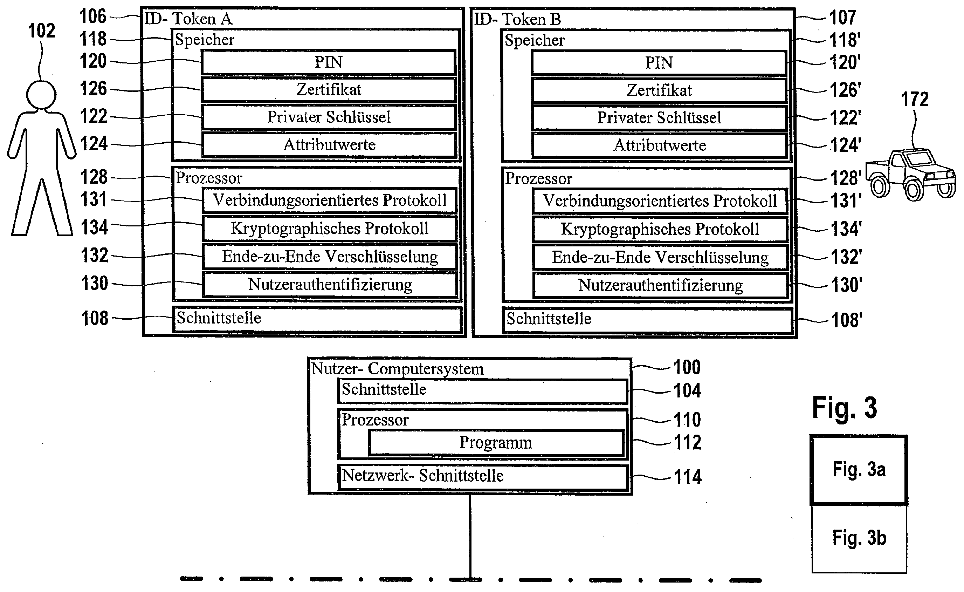

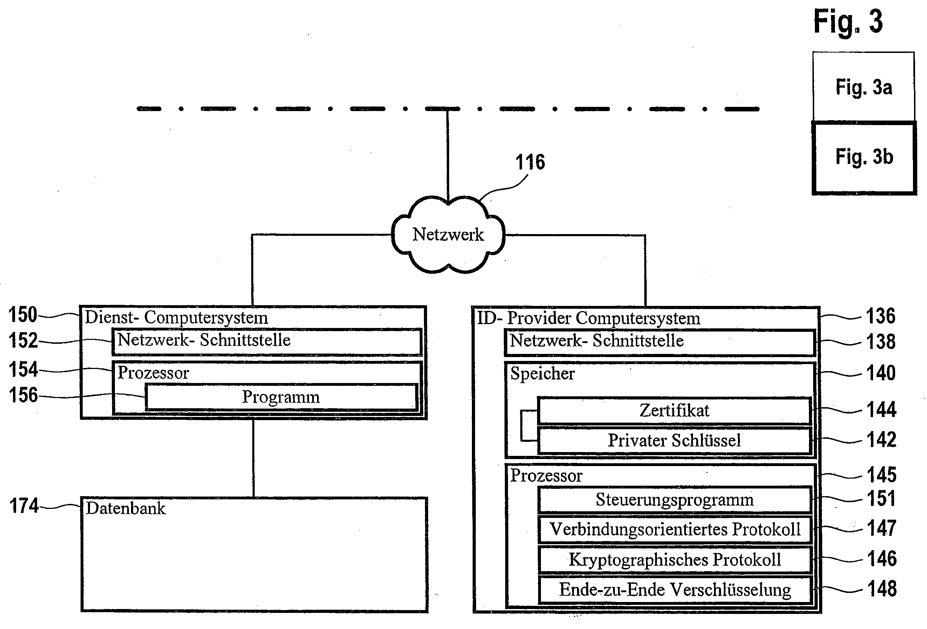

Die Figur 3 zeigt ein Nutzer-Computersystem 100 eines Nutzers 102. Das Nutzer-Computersystem 100 hat eine Schnittstelle 104 zur Kommunikation mit dem ID-Token 106 A, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Die Programminstruktionen 131 dienen zur Durchführung des verbindungsorientierten Protokolls seitens des ID-Tokens 106. Beispielsweise kann es sich bei dem verbindungsorientierten Protokoll um TCP handeln. Unter einem "verbindungsorientierten Protokoll" wird jedes Protokoll zum Aufbau eines virtuellen Kanals zwischen zwei Endpunkten verstanden, hier also zwischen einem der ID-Token und dem ID-Provider-Computersystem 136. Auf diesen Kanal kann in beide Richtungen übertragen werden. Beispielsweise wird hierfür ein proprietäres oder ein standardisiertes Protokoll, wie z.B. TCP verwendet; TCP ist in der Schicht 4 des OSI-Referenzmodells angesiedelt und kann auf das Internet-Protokoll aufsetzen.

Alternativ zu der in der Figur 3 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Die Schnittstelle 104 und ggf. das Lesegerät sind so ausgebildet, dass gleichzeitig die Verbindungen 101 und 103 (vgl. Fig.1) aufrechterhalten werden können. Beispielsweise sind in dem Lesegerät zwei Steckplätze für die ID-Token A und B vorgesehen oder es ist eine gleichzeitige Kommunikation mit den ID-Token A und B über einen RF Kanal möglich.

Der ID-Token B 107 ist in der hier betrachteten Ausführungsform prinzipiell gleich oder ähnlich aufgebaut wie der ID-Token A 106. Zur Beschreibung der einzelnen Komponenten des ID-Tokens B 107 wird daher auf die obige Beschreibung der Komponenten des ID-Tokens A 106 verwiesen. Im Unterschied zu dem ID Token A kann ein Schreibzugriff in den geschützten Speicherbereich 124' über die Verbindung B erfolgen, um die dort gespeicherten Attributwerte mit den Schreibdaten zu aktualisieren. Hiervon ausgenommen ist der Attributwert mit dem Unique Identifier, d.h. zum Beispiel der Fahrgestellnummer, welcher unveränderlich ist.

Die Programminstruktionen 130' können entfallen, falls für den ID-Token 107 keine Nutzerauthentifizierung vorgesehen ist.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist.

Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 bzw. des ID-Tokens 107 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 bzw. 107 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Die Programminstruktionen 147 dienen zur Implementierung des verbindungsorientierten Protokolls, und zwar so, dass gleichzeitig die beiden Verbindungen 101 und 103 aufrechterhalten werden können.

Die Programminstruktionen 151 dienen zur Implementierung eines Steuerungsprogramms für die Ablaufsteuerung.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Das Dienst-Computersystem 150 kann zur Entgegennahme einer Dienst-Anforderung zur Initialisierung, insbesondere zur Aktualisierung des ID-Tokens B, ausgebildet sein.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seine Dienst-Anforderung eingeben kann.

Je nach der Art der Dienst-Anforderung muss das Dienst-Computersystem 150 ein oder mehrere Attribute des ID-Tokens 106 und des ID-Tokens 107 von dem ID-Provider Computersystem 136 empfangen, um die Dienst-Anforderung ausführen zu können.

Zur Inanspruchnahme des von dem Dienst-Computersystem 150 zur Verfügung gestellten Dienstes wird beispielsweise wie folgt vorgegangen:
1. Authentifizierung des Nutzers 102 gegenüber dem ID-Token 106.
   Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des ID-Provider-Computersystems 136 gegenüber dem ID-Token 106.
   Hierzu wird die Verbindung 101 zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese Verbindung 101 an den ID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.
3. Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute A. Aufgrund eines entsprechenden Lesekommandos, welches das ID-Provider-Computersystem 136 über die Verbindung an den ID-Token 106 sendet, werden die angeforderten Attribute A aus dem geschützten Speicherbereich 124 ausgelesen und durch Ausführung der Programminstruktionen 132 verschlüsselt. Die verschlüsselten Attribute A werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.
   Diese Attribute A werden von dem ID-Provider-Computersystem mit Hilfe seines Zertifikats 144 signiert und über das Nutzer-Computersystem 100 oder direkt an das Dienst-Computersystem 150 übertragen. Dadurch wird das Dienst-Computersystem 150 über die aus dem ID-Token 106 ausgelesenen Attribute A in Kenntnis gesetzt. Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.
4. Zur Übertragung zumindest eines Attributs B an das Dienst-Computersystem 150 wird analog dazu vorgegangen, d.h. die o.g. Schritte 1 bis 3 werden mit Bezug auf den ID-Token 107 ausgeführt, wozu die Verbindung 103 aufgebaut wird. Im Ergebnis hat das Dienst-Computersystem 150 dann die Attribute A und B auf sichere und vertrauenswürdige Art empfangen. Die Authentifizierung des Nutzers gegenüber dem ID-Token B kann im Unterschied zu der ersten Durchführung der Schritte 1 bis 3 entfallen.
5. Mit Hilfe der Attribute A und B ermittelt das Dienst-Computersystem dann die Daten, die in den ID-Token B zum Beispiel zur Aktualisierung oder Initialisierung von einem der in dem geschützten Bereich 124' gespeicherten Attributwerte dienen sollen. Wenn der ID-Token B zum Beispiel einem Kraftfahrzeug 172 zugeordnet ist und es sich bei dem Dienst-Computersystem 150 um eine Online-Kfz-Meldebehörde handelt, kann das Dienst-Computersystem das aktuelle amtliche Kennzeichen des Kraftfahrzeugs 172 ermitteln, indem es mit Hilfe der Attribute A und/oder B auf eine Datenbank 174 zugreift, welche mit dem Dienst-Computersystem 150 verbunden ist. Dies kann so erfolgen, dass durch Ausführung der Programminstruktionen 156 mit Hilfe der Attribute A und/oder B eine Datenbankabfrage der Datenbank 174 durchgeführt wird, um das dort gespeicherte aktuelle Kfz-Kennzeichen abzurufen. Das Dienst-Computersystem signiert dann die Daten, welche das aktuelle amtliche Kennzeichen beinhalten, mit seinem privaten Schlüssel und sendet die signierten Daten über das Netzwerk 116 an das ID-Provider-Computersystem 136. Das ID-Provider-Computersystem 136 prüft dann die Validität der Signatur. Wenn die Signatur valide ist, prüft das Steuerungsprogramm 151, ob beide Verbindungen 101 und 103 noch bestehen. Falls dies der Fall ist, schreibt das Steuerungsprogramm 151 dann die von dem Dienst-Computersystem 150 empfangenen Daten über die Verbindung 103 in den ID-Token B, beispielsweise um den Attributwert des amtlichen Kennzeichens, der in dem geschützten Speicherbereich 124' des ID-Tokens B gespeichert ist, zu aktualisieren.

Je nach Ausführungsform kann die Reihenfolge der Authentifizierung unterschiedlich sein. Beispielsweise kann vorgesehen sein, dass sich zunächst der Nutzer 102 gegenüber dem 1D-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102. Entsprechendes gilt für den ID-Token 107.

In dem ersten Fall ist der ID-Token 106 bzw. 107 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist. Entsprechendes gilt für den ID-Token 107.

Von besonderem Vorteil ist die Nutzbarmachung der ID-Token 106 und 107 für zum Beispiel E-Government-Anwendungen, und zwar medienbruchfrei und rechtssicher aufgrund des durch die Notwendigkeit der Authentifizierung des Nutzers 102 und des ID-Provider-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist.

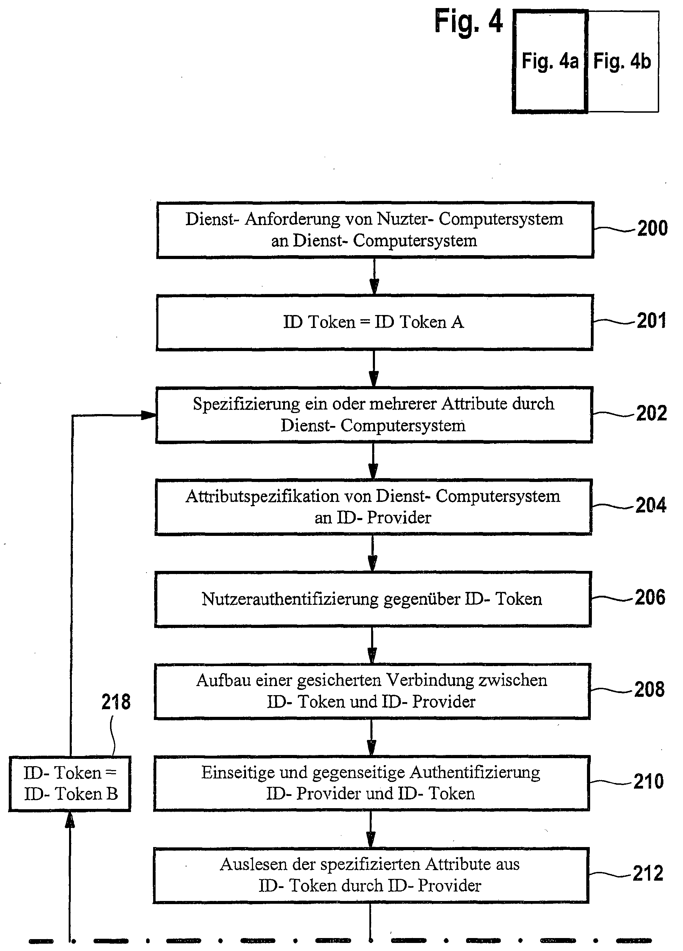

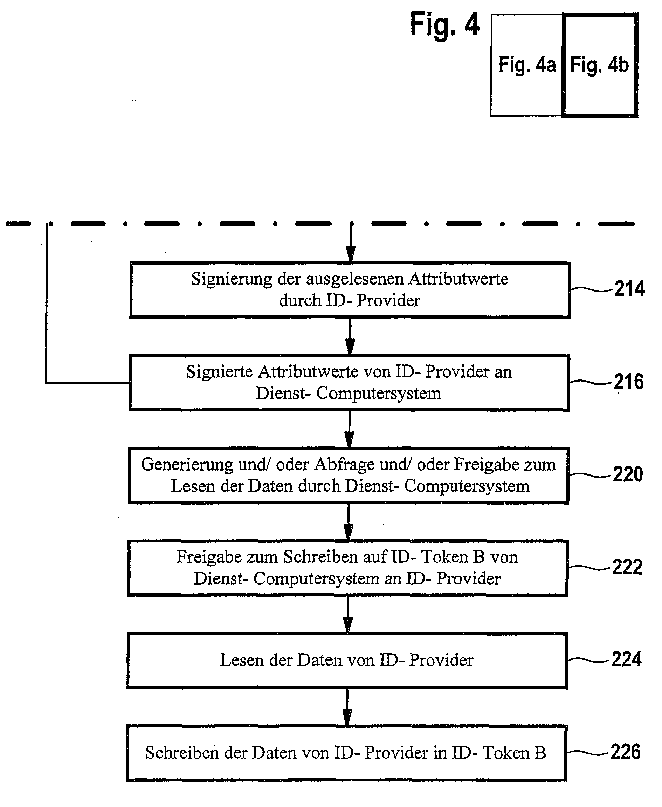

Die Figur 4 zeigt eine Ausführungsform eines erfindungsgemäßen Verfahrens. In dem Schritt 200 wird eine Dienst-Anforderung von dem Nutzer-Computersystem an das Dienst-Computersystem gesendet. Beispielsweise startet der Nutzer hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung ein, zum Beispiel zur Aktualisierung seines ID-Tokens B.

Für diese Aktualisierung ist es erforderlich, dass sowohl zwischen dem ID-Token A und dem ID-Provider als auch zwischen dem ID-Token B und dem ID-Provider jeweils eine Verbindung A bzw. B aufgebaut wird, über die der ID-Provider Attribute aus den ID-Token A und B lesen kann. In der hier betrachteten Ausführungsform erfolgt der Aufbau der Verbindungen A und B sequenziell, wobei beispielsweise zunächst die Verbindung A aufgebaut wird. Hierzu wird in dem Schritt 201 das aktuell verwendete ID-Token gleich dem ID-Token A gesetzt.

In dem Schritt 202 spezifiziert das Dienst-Computersystem 150 daraufhin ein oder mehrere Attribute, welche es benötigt, um die Berechtigung des Nutzers für die Dienst-Anforderung zu prüfen. Insbesondere kann das Dienst-Computersystem solche Attribute spezifizieren, welche die digitale Identität des Nutzers 102 bestimmen. Diese Spezifizierung der Attribute durch das Dienst-Computersystem 150 kann fest vorgegeben sein oder je nach der Dienst-Anforderung im Einzelfall durch das Dienst-Computersystem 150 anhand vorgegebener Regeln bestimmt werden.

In dem Schritt 204 wird die Attributspezifikation, d.h. die in dem Schritt 202 erfolgte Spezifizierung der ein oder mehreren der Attribute, von dem Dienst-Computersystem an das ID-Provider-Computersystem übertragen, und zwar entweder direkt oder über das Nutzer-Computersystem.

Um dem ID-Provider-Computersystem die Möglichkeit zu geben, Attribute aus seinem ID-Token auszulesen, authentifiziert sich der Nutzer in dem Schritt 206 gegenüber dem ID-Token.

In dem Schritt 208 wird eine Verbindung zwischen dem ID-Token und dem ID-Provider-Computersystem aufgebaut. Hierbei handelt es sich vorzugsweise um eine gesicherte Verbindung, beispielsweise nach einem so genannten Secure Messaging-Verfahren.

In dem Schritt 210 erfolgt zumindest eine Authentifizierung des ID-Provider-Computersystems gegenüber dem ID-Token über die in dem Schritt 208 aufgebaute Verbindung. Zusätzlich kann eine Authentifizierung auch des ID-Tokens gegenüber dem ID-Provider-Computersystem vorgesehen sein.

Nachdem sowohl der Nutzer als auch das ID-Provider-Computersystem erfolgreich gegenüber dem ID-Token authentifiziert worden sind, erhält das ID-Provider-Computersystem von dem ID-Token die Zugriffsberechtigung zum Auslesen der Attribute. In dem Schritt 212 sendet das ID-Provider-Computersystem ein oder mehrere Lesekommandos zum Auslesen der gemäß Attributspezifikation erforderlichen Attribute aus dem ID-Token. Die Attribute werden dann mittels Ende-zu-Ende-Verschlüsselung über die gesicherte Verbindung an das ID-Provider-Computersystem übertragen und dort entschlüsselt.

Die ausgelesenen Attributwerte werden in dem Schritt 214 von dem ID-Provider-Computersystem signiert. In dem Schritt 216 sendet das ID-Provider-Computersystem die signierten Attributwerte über das Netzwerk. Die signierten Attributwerte erreichen das Dienst-Computersystem entweder direkt oder über das Nutzer-Computersystem. Im letzteren Fall kann der Nutzer die Möglichkeit haben, die signierten Attributwerte zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Nutzer-Computersystem an das Dienst-Computersystem weitergeleitet werden. Hierdurch ist größtmögliche Transparenz für den Nutzer hinsichtlich der von dem ID-Provider-Computersystem an das Dienst-Computersystem gesendeten Attribute hergestellt.

Danach wird in dem Schritt 218 der aktuell verarbeitete ID-Token gleich den ID-Token B gesetzt und die Ablaufsteuerung geht zu dem Schritt 202 zurück. Alternativ kann auch zu dem Schritt 206 zurückgegangen werden, wenn das Dienst-Computersystem in dem Schritt 202 auch die aus dem ID-Token B auszulesenden Attribute B spezifiziert hat, und wenn diese Spezifizierung in dem Schritt 204 bereits an den ID-Provider übertragen und dort zwischengespeichert worden ist. Vorzugsweise wird aber auf eine solche Zwischenspeicherung verzichtet, um den ID-Provider statuslos ausbilden zu können.

Der Schritt 206 kann hinsichtlich des ID-Tokens B entfallen.

Nach der wiederholten Ausführung der Schritte 202 bis 216 bezüglich des ID-Tokens B hat das Dienst-Computersystem also die Attribute A und B empfangen.

In dem Schritt 220 ermittelt dann das Dienst-Computersystem anhand der Attribute A und/oder B die Daten für die Aktualisierung oder Initialisierung des ID-Tokens B. Dies kann so erfolgen, dass das Dienst-Computersystem diese Daten generiert, aus einer Datenbank abfragt oder die Datenbank zum Zugriff durch das ID-Provider-Computersystem zum Auslesen dieser Daten über das Netzwerk freigibt.

In dem Schritt 220 sendet das Dienst-Computersystem ein Freigabesignal zum Schreiben der Daten auf den ID-Token B an den ID-Provider. Daraufhin liest der ID-Provider die von dem Computersystem in dem Schritt 220 ermittelten Daten in dem Schritt 224, indem das ID-Provider-Computersystem beispielsweise über das Netzwerk auf das Dienst-Computersystem zugreift. Anschließend schreibt das ID-Provider-Computersystem die Daten in dem Schritt 226 in den ID-Token B über die Verbindung B, und zwar unter der Voraussetzung, dass auch die Verbindung A noch existent ist.

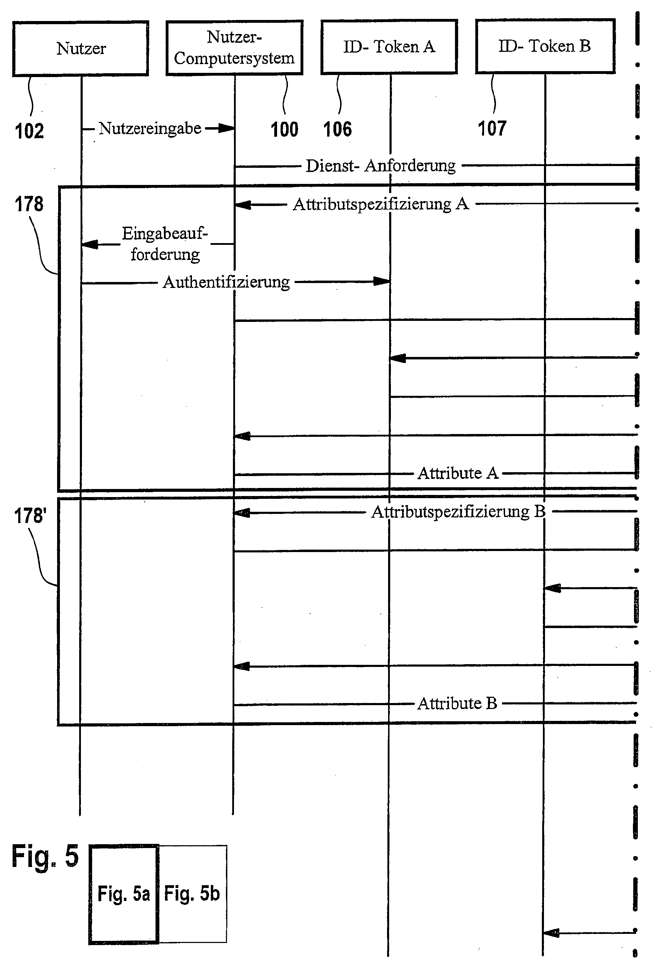

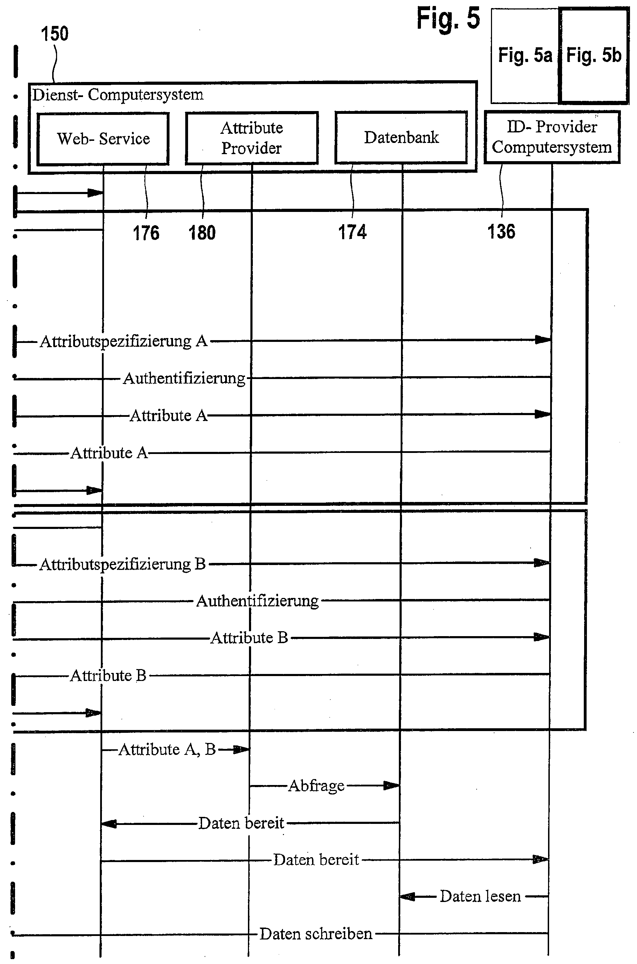

Die Figur 5 zeigt eine weitere Ausführungsform eines erfindungsgemäßen Verfahrens. Durch eine Nutzereingabe eines Nutzers 102 in ein Nutzer-Computersystem 100 spezifiziert der Nutzer 102 einen Dienst eines Dienst-Computersystems, welchen er oder sie in Anspruch nehmen möchte. Dies erfolgt beispielsweise durch Aufruf einer Internetseite des Dienst-Computersystems und einer Auswahl eines der dort angebotenen Dienste. Die Dienst-Anforderung des Nutzers 102 wird von dem Nutzer-Computersystem 100 an das Dienst-Computersystem 150 übertragen.

Beispielsweise beinhaltet das Dienst-Computersystem 150 einen Web Service 176, insbesondere nach einer von W3C spezifizierten Web Services Architecture. Der Web Service 176 dient als Schnittstelle des Dienst-Computersystem 150 gegenüber dem Nutzer-Computersystem 100 und/oder dem ID-Provider Computersystem 136.

Das Dienst-Computersystem 150 antwortet auf die Dienst-Anforderung mit einer Attributspezifizierung der Attribute A, d.h. beispielsweise einer Liste von Attributnamen. Nach Empfang der Attributspezifizierung fordert das Nutzer-Computersystem 100 den Nutzer 102, beispielsweise durch eine Eingabeaufforderung, zur Authentifizierung gegenüber dem ID-Token 106 auf.

Der Nutzer 102 authentifiziert sich daraufhin gegenüber dem 1D-Token 106, beispielsweise durch Eingabe seiner PIN. Nach erfolgreicher Authentifizierung wird die Attributspezifizierung von dem Nutzer-Computersystem 100 an ein ID-Provider-Computersystem 136 weitergeleitet. Hierzu wird die Verbindung A aufgebaut. Das ID-Provider-Computersystem 136 authentifiziert sich daraufhin gegenüber dem ID-Token 106 und richtet eine Leseanforderung zum Lesen der Attribute gemäß der Attributspezifizierung an den ID-Token 106.

Unter der Voraussetzung der vorherigen erfolgreichen Authentifizierung des Nutzers 102 und des ID-Provider-Computersystems 136 antwortet der ID-Token 106 auf die Leseanforderung mit den gewünschten Attributen A. Das ID-Provider-Computersystem 136 signiert die Attribute A und sendet die signierten Attribute an das Nutzer-Computersystem 100. Nach Freigabe durch den Nutzer 102 werden die signierten Attribute dann an das Dienst-Computersystem 150 übertragen.

Die in der Figur 5 gekennzeichnete Teilsequenz 178 mit den Schritten zur Übertragung der Attribute A an den Webservice 176 wird anschließend nochmals ausgeführt, und zwar bezüglich des ID-Tokens B, um auch die Attribute B gemäß der Attributspezifizierung an den Webservice 176 zu übertragen. Hierbei können die Schritte für die Authentifizierung des Nutzers gegenüber dem ID-Token B entfallen.

Die hierzu vorgesehene Teilsequenz 178' kann also beispielsweise wie folgt durchgeführt werden:
Das Dienst-Computersystem 150 antwortet auf den Empfang der Attribute A mit einer Attributspezifizierung der Attribute B, d.h. beispielsweise einer Liste von Attributnamen. Die Attributspezifizierung wird von dem Nutzer-Computersystem 100 an ein ID-Provider-Computersystem 136 weitergeleitet. Hierzu wird die Verbindung B aufgebaut. Das ID-Provider-Computersystem 136 authentifiziert sich daraufhin gegenüber dem ID-Token 107 und richtet eine Leseanforderung zum Lesen der Attribute gemäß der Attributspezifizierung an den ID-Token 107.

Unter der Voraussetzung der vorherigen erfolgreichen Authentifizierung des Nutzers 102 und des ID-Provider-Computersystems 136 antwortet der ID-Token 107 auf die Leseanforderung mit den gewünschten Attributen B. Das ID-Provider-Computersystem 136 signiert die Attribute B und sendet die signierten Attribute an das Nutzer-Computersystem 100. Nach Freigabe durch den Nutzer 102 werden die signierten Attribute dann an das Dienst-Computersystem 150 übertragen.

Der Webservice 176 leitet dann die Attribute A und B an eine Komponente 180 des Dienst-Computersystems 150 weiter, welche als Attribute-Provider dient, d.h. zur Ermittlung der aktualisierten oder initialen Attributwerte zum Schreiben in den ID-Token B.

Dies kann so erfolgen, dass die Komponente 180 mit Hilfe der Attribute A und/oder B eine Datenbankabfrage der Datenbank 174 durchführt. Die in der Datenbank 174 durch die Datenbankabfrage identifizierten Datenbankeinträge, die die in den ID-Token B zu schreibenden Daten beinhalten, können von der Komponente 180 mit einem sogenannten Flag gekennzeichnet werden. Daraufhin wird von der Datenbank 174 oder von der Komponente 180 an den Webservice 176 gemeldet, dass die Daten bereitgestellt sind. Dieses Signal wird von dem Webservice 176 an das ID-Provider-Computersystem 136 weitergeleitet. Das ID-Provider-Computersystem 136 liest daraufhin die Daten über den Webservice 176 aus der Datenbank 174 aus und schreibt die Daten dann in den ID-Token B unter der Voraussetzung, dass beide Verbindungen A und B bis zur Beendigung des Schreibvorgangs noch bestehen.

Zur Sicherung der von der Komponente 180 bereitgestellten Daten gegen unautorisierte Zugriffe kann so vorgegangen werden, dass von der Komponente 180 ein Schlüssel generiert wird, der zusammen mit dem Signal "Daten bereit" an das ID-Provider-Computersystem 136 gesendet wird. Das anschließende Lesen der Daten durch das ID-Provider-Computersystem 136 ist dann nur möglich, wenn das ID-Provider-Computersystem 136 diesen Schlüssel hat. Beispielsweise muss sich das ID-Provider-Computersystem 136 gegenüber dem Web-Service mit diesem Schlüssel zunächst authentifizieren, um auf die Daten zugreifen zu können.

Alternativ oder zusätzlich kann die Bereitstellung der Daten durch die Komponente 180 nur für einen beschränkten Zeitraum erfolgen. Hierzu startet die Komponente 180 nachdem die Daten bereitgestellt worden sind oder nachdem das Signal "Daten bereit" an das ID-Provider-Computersystem 136 gesendet worden ist, einen Timer. Das Lesen der Daten durch das ID-Provider-Computersystem 136 ist nur dann möglich, wenn dieses vor Ablauf des Timers erfolgt.

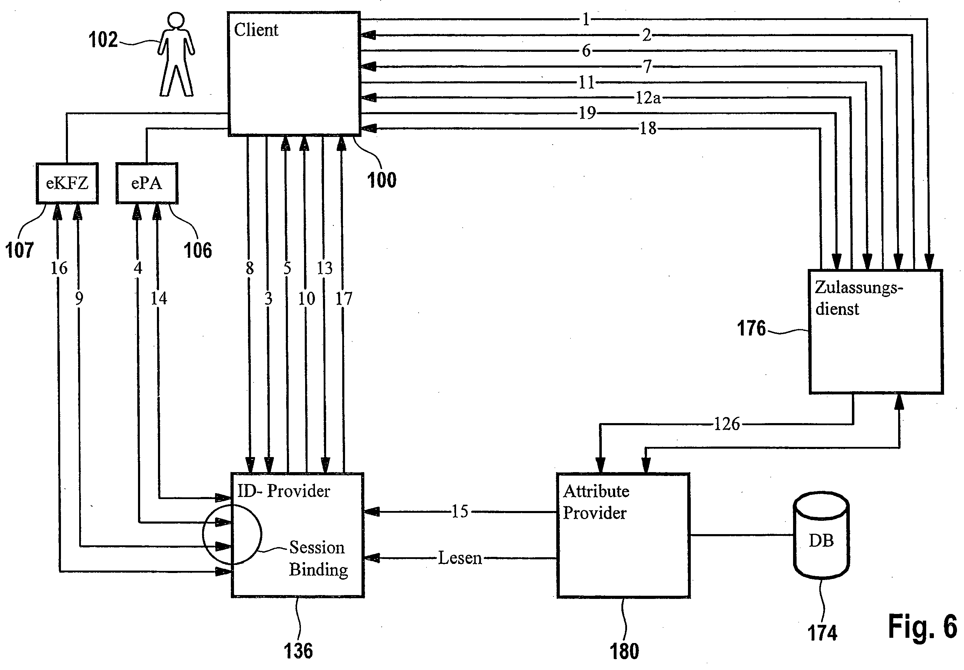

In der Ausführungsform der Figur 6 ist das Nutzer-Computersystem 100 als Client-Computer ausgebildet. Bei dem ID-Token A 106 handelt es sich hier um einen elektronischen Personalausweis "ePA". Bei dem ID-Token B 107 handelt es sich um ein elektronisches Kraftfahrzeugdokument, wie zum Beispiel einen elektronischen Fahrzeugbrief oder einen elektronischen Fahrzeugschein "eKFZ". Der Webservice 176 ist hier als Zulassungsdienst ausgebildet, d.h. der Webservice stellt verschiedene Dienste für die Online-Anmeldung oder -Ummeldung von Kraftfahrzeugen zur Verfügung. Der Web Service 176 und der Attribute Provider 180 können mit einer Verbindung zum Lesen und/oder Schreiben vom Daten verbunden sein.

Zur Aktualisierung des ID-Tokens 107, zum Beispiel mit einem neuen amtlichen Kennzeichen, wird wie folgt vorgegangen:
1. Der Nutzer 102 ruft von seinem Nutzer-Computersystem 100 mit Hilfe einer Dienstanforderung einen von dem Webservice 176 zur Verfügung gestellten Dienst auf.
2. Der Webservice 176 antwortet auf diese Dienstanforderung mit einer Authentifizierungsanfrage, d.h. der Webservice 106 spezifiziert diejenigen Attribute A mit Hilfe einer Attributspezifizierung A, welche er bezüglich des Nutzers 102 benötigt. Diese Authentifizierungsanfrage wird von dem Webservice176 an das Nutzer-Computersystem 100 gesendet. Außerdem sendet der Webservice 176 an das Nutzer-Computersystem 100 eine Information, wonach eine Multidokument-Session folgt, d.h. eine Session, bei der parallel zwei Verbindungen zu den ID-Token 106 und 107 bestehen sollen.
3. Von dem Nutzer-Computersystem 100 wird eine Anfrage zur Benutzer-ID-Betätigung an den ID-Provider 136 gesendet. Diese Anfrage beinhaltet die Attributspezifizierung A, d.h. eine Spezifizierung der Attribute A, die aus dem ID-Token 106 ausgelesen werden sollen. Ferner wird von dem Nutzer-Computersystem 100 an das ID-Provider-Computersystem 136 die Information gesendet, wonach die mit dem ID-Token 106 aufzubauende Verbindung A nach Abfrage der Attribute A aus dem ID-Token 106 aufrechterhalten werden soll.
4. Zwischen dem ID-Provider-Computersystem 136 und dem ID-Token 106 wird dann die Verbindung A aufgebaut und das ID-Provider-Computersystem 136 liest die Attribute A aus dem ID-Token A aus. Nach dem Auslesen der Attribute A bleibt die Verbindung A, d.h. die Session, bestehen.
5. Das ID-Provider-Computersystem 136 sendet die Attribute A an das Nutzer-Computersystem 100 als Antwort auf die Anfrage Schritts 3.
6. Das Nutzer-Computersystem 100 sendet die Attribute A an den Webservice 176 als Antwort auf die Authentifizierungsanfrage des Schritts 2.
7. Der Webservice 176 sendet eine Authentifizierungsanfrage bezüglich von Attributen B an das Nutzer-Computersystem 100, d.h. bezüglich solcher Attribute B, die in dem ID-Token 107 gespeichert sind. Die Authentifizierungsanfrage beinhaltet also eine Attributspezifizierung der Attribute B. Ferner wird eine Information übertragen, dass die Multidokument-Session erweitert werden soll, d.h. dass eine weitere Verbindung B aufgebaut werden soll.
8. Das Nutzer-Computersystem 100 sendet eine Anfrage für eine Kraftfahrzeug-ID-Bestätigung an das ID-Provider-Computersystem 136, d.h. eine Anfrage zur Lieferung der Attribute B, so wie sie in der mit der Authentifizierungsanfrage des Schritts 7 empfangenen Attributspezifizierung B spezifiziert sind. Ferner wird eine Information gesendet, wonach die hierzu aufzubauende Verbindung B mit dem ID-Token 107 nach Auslesen der Attribute B bestehen bleiben soll.
9. Das ID-Provider-Computersystem 136 baut die Verbindung B mit dem ID-Token 107 auf und liest hierüber die Attribute B aus. Nach dem Auslesen der Attribute B bleibt die Verbindung B bestehen. Beispielsweise wird ein sogenanntes Session Binding der Verbindung A und B durchgeführt.
10. Als Antwort auf die Anfrage des Schritts 8 sendet das ID-Provider-Computersystem 136 an das Nutzer-Computersystem 100 die Attribute B.
11. Als Antwort auf die Authentifizierungsanfrage des Schritts 7 sendet das Nutzer-Computersystem 100 die Attribute B an den Webservice 176.
12a. Der Webservice 176 sendet ein Freigabesignal zum Schreiben von Daten, wie zum Beispiel des neuen amtlichen Kennzeichens, auf den ID-Token 107 an das Nutzer-Computersystem 100.
12b. Der Webservice 176 sendet ein Freigabesignal zum Lesen der auf den ID-Token 107 zu schreibenden Daten von dem Attribute-Provider 180.
13. Das Nutzer-Computersystem 100 sendet an das ID-Provider-Computersystem 136 aufgrund des in dem Schritt 12a empfangenen Freigabesignals eine Anforderung zum Beschreiben des ID-Tokens 107.
14. Das ID-Provider-Computersystem 136 liest noch einmal die Attribute A aus dem ID-Token 106 über die Verbindung A, da diese in dem ID-Provider-Computersystem 136 nach dem ersten Lesevorgang nicht zwischengespeichert worden sind.
15. Das ID-Provider-Computersystem 136 liest von dem Attribute-Provider 180 die Daten zum Beschreiben des ID-Tokens 107, was möglich ist, da der Attribute-Provider 180 in dem Schritt 12b das Freigabesignal zum Lesen empfangen hatte.
16. Das ID-Provider-Computersystem 136 generiert aus den Attributen A und den vom den Attribute-Provider 180 gelesenen Daten einen Datensatz zum Schreiben auf den ID-Token 107 und schreibt diesen Datensatz dann über die Verbindung B in den ID-Token 107.
17. Das ID-Provider-Computersystem 136 sendet eine Bestätigung an das Nutzer-Computersystem 100, und zwar als Bestätigung für die in dem Schritt 13 empfangene Anforderung.
18. Das Nutzer-Computersystem 100 sendet an den Webservice 176 eine Bestätigung bezüglich des Freigabesignals des Schritts 12a.
19. Der Webservice 176 sendet an das Nutzer-Computersystem 100 eine Bestätigung bezüglich der Dienstanforderung des Schritts 1, um zu bestätigen, dass der ID-Token 107 erfolgreich aktualisiert worden ist.

Von besonderem Vorteil ist hierbei, dass das ID-Provider-Computersystem 136 als Vermittler zwischen den verschiedenen Datenquellen, die unterschiedlichen Hoheiten unterliegen, fungiert. Ferner ist von besonderem Vorteil, dass das ID-Provider-Computersystem 136 den Vertrauenspunkt für die Bindung der unterschiedlichen Sessions bildet.

### Bezugszeichenliste

- 100: Nutzer-Computersystem
- 101: Verbindung A
- 102: Nutzer
- 103: Verbindung B
- 104: Schnittstelle
- 106: ID-Token
- 107: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 131: Programminstruktionen
- 132: Programminstruktionen
- 134: Programminstruktionen
- 136: ID-Provider-Computersystem
- 138: Netzwerk-Schnittstelle.
- 140: Speicher
- 142: privater Schlüssel
- 144: Zertifikat
- 145: Prozessor
- 146: Programminstruktionen
- 147: Programminstruktionen
- 148: Programminstruktionen
- 149: Programminstruktionen
- 150: Dienst-Computersystem
- 151: Programminstruktionen
- 152: Netzwerk-Schnittstelle
- 154: Prozessor
- 156: Programminstruktionen
- 158: Konfigurationsdatensatz
- 160: Konfigurationsdatensatz
- 161: Konfigurationsdatensatz
- 162: Nutzereingabe
- 166: Attributspezifizierung
- 168: Anforderung
- 170: Antwort
- 172: Kraftfahrzeug
- 174: Datenbank
- 176: Webservice
- 178: Teilsequenz.
- 180: Komponente

## Patentansprüche

1. Verfahren zur Speicherung von Daten mit folgenden Schritten:
- Aufbau einer ersten Verbindung (101) zwischen einem ersten ID-Token (106) und einem ersten Computersystem (136) über ein zweites Computersystem (100) zum Auslesen zumindest eines ersten Attributs aus dem ersten ID-Token,
- Aufbau einer zweiten Verbindung (103) zwischen einem zweiten ID-Token (107) und dem ersten Computersystem über das zweite Computersystem zum Auslesen zumindest eines zweiten Attributs aus dem zweiten ID-Token,
- Senden der ersten und zweiten Attribute von dem ersten Computersystem an ein drittes Computersystem (150),
- Empfang der Daten von dem dritten Computersystem durch das erste Computersystem,
- Schreiben der Daten von dem ersten Computersystem in das zweite ID-Token über die zweite Verbindung, um die Daten in dem zweiten ID-Token zu speichern, wobei Voraussetzung für das Schreiben der Daten ist, dass auch die erste Verbindung noch besteht,
wobei es sich bei den ersten und zweiten Verbindungen jeweils um Verbindungen mit Ende-zu-Ende-Verschlüsselung und mit einem verbindungsorientierten Protokoll handelt.

2. Verfahren nach Anspruch 1, wobei es sich bei dem ersten und/oder dem zweiten ID-Token um ein Dokument, insbesondere ein Wert- oder Sicherheitsdokument, handelt.

3. Verfahren nach Anspruch 1 oder 2, wobei es sich bei dem verbindungsorientierten Protokoll um TCP handelt.

4. Verfahren nach Anspruch 1, 2 oder 3, wobei zum Aufbau jeder der ersten und zweiten Verbindungen jeweils die folgenden Schritte durchgeführt werden:
- Authentifizierung eines Nutzers (102) gegenüber dem betreffenden ID-Token,
- Authentifizierung des ersten Computersystems gegenüber dem betreffenden ID-Token, wobei nach erfolgreicher Authentifizierung des Nutzers und des ersten Computersystems gegenüber den betreffenden ID-Token ein Lesezugriff des ersten Computersystems auf das zumindest erste bzw. zweite in dem betreffenden ID-Token gespeicherte Attribut zur Übertragung nach dessen Signierung an das dritte Computersystem erfolgt.

5. Verfahren nach Anspruch 4, wobei die Authentifizierung des ersten Computersystem gegenüber dem betreffenden ID-Token mit Hilfe eines Zertifikats (144) des ersten Computersystems erfolgt, wobei das Zertifikat eine Angabe derjenigen in dem betreffenden ID-Token gespeicherten Attribute beinhaltet, für welche das erste Computersystem für den Lesezugriff berechtigt ist,
- wobei insbesondere der betreffende ID-Token die Leseberechtigung des ersten Computersystems für den Lesezugriff auf zumindest das erste bzw. das zweite Attribut mit Hilfe des Zertifikats überprüft, und/oder
- wobei insbesondere das Zertifikat eine Spezifizierung der Schreibrechte des ersten Computersystems zum Schreiben der Daten in den zweiten ID-Token beinhaltet, wobei der zweite ID-Token die Schreibberechtigung des ersten Computersystems für den Schreibzugriff zum Schreiben der Daten mit Hilfe des Zertifikats überprüft.

6. Verfahren nach einem der vorhergehenden Ansprüche, mit folgenden weiteren Schritten:
- Signierung des zumindest ersten bzw. zweiten aus den betreffenden ID-Token gelesenen Attributs durch das erste Computersystem,
- Übertragung des signierten Computersystems von dem ersten Computersystem an das dritte Computersystem.

7. Verfahren nach einem der vorhergehenden Ansprüche, mit folgenden weiteren Schritten:
- Senden einer Dienst-Anforderung von dem zweiten Computersystem an das dritte Computersystem,
- Spezifizierung eines oder mehrerer Attribute durch das dritte Computersystem,
- Senden einer Attributspezifizierung von dem dritten Computersystem an das erste Computersystem, wobei der Lesezugriff des ersten Computersystems auf den ersten bzw. den zweiten ID-Token erfolgt, um die in der Attributspezifizierung spezifizierten ein oder mehreren Attributen auszulesen, wobei insbesondere die Dienst-Anforderung einen Identifikator zur Identifizierung des ersten Computersystems beinhaltet, um das erste Computersystem für den Aufbau der ersten und zweiten Verbindungen und das Schreiben der Daten auszuwählen.

8. Verfahren nach einem der vorhergehenden Ansprüche, wobei das zumindest erste bzw. zweite von dem ersten Computersystem aus dem betreffenden ID-Token gelesene Attribut an das zweite Computersystem gesendet wird, von wo es nach Freigabe durch den Nutzer an das dritte Computersystem weitergeleitet wird, wobei insbesondere der Nutzer das zumindest erste bzw. zweite Attribut vor der Weiterleitung an das dritte Computersystem durch weitere Daten ergänzen kann.

9. Verfahren nach einem der vorhergehenden Ansprüche, wobei das erste Computersystem vor dem Schreiben der Daten erneut auf den ersten ID-Token über die erste Verbindung zugreift, um das erste Attribut erneut zu lesen, und wobei das erste Computersystem aus dem ersten Attribut und den von dem dritten Computersystem empfangenen Daten die Schreibdaten generiert, welche dann von dem ersten Computersystem in das zweite ID-Token geschrieben werden.

10. Verfahren nach einem der vorhergehenden Ansprüche, wobei das erste ID-Token einem Nutzer zugeordnet ist und wobei das zweite ID-Token einer Sache, insbesondere einem Kraftfahrzeug, zugeordnet ist, wobei das zweite Attribut die Sache eindeutig identifiziert.

11. Computerprogrammprodukt mit von einem Computersystem ausführbaren Instruktionen zur Durchführung eines Verfahrens nach einem der vorhergehenden Ansprüche.

12. ID-Token mit
- einem geschützten Speicherbereich (124') zur Speicherung von zumindest einem Attribut und zur Speicherung von Daten von einem Dienst-Computersystem (150), wobei zum Speichern der Daten eine erste Verbindung zwischen einem ersten Computersystem (136) und einem ersten ID-Token (106) bestehen muss und aus dem ersten ID-Token ein erstes Attribut ausgelesen wurde;
- Mitteln (134) zur Authentifizierung des ersten Computersystems (136) gegenüber dem ID-Token, Mitteln (131') zum Aufbau einer zweiten Verbindung (103) zwischen dem ID-Token und dem ersten Computersystem nach einem verbindungsorientierten Protokoll, über die das erste Computersystem zumindest ein zweites Attribut auslesen kann, wobei eine notwendige Voraussetzung für das Auslesen des zumindest einen Attributs aus dem ID-Token durch das erste Computersystem die erfolgreiche Authentifizierung des ersten Computersystems gegenüber dem ID-Token ist und wobei die Daten über die zweite Verbindung in den Speicherbereich geschrieben werden können, wobei Voraussetzung für das Schreiben der Daten ist, dass die erste Verbindung noch besteht, und wobei es sich insbesondere bei dem verbindungsorientierten Protokoll um TCP handelt und wobei es sich bei dem ID-Token insbesondere um ein Dokument, insbesondere ein Wert- oder Sicherheitsdokument, handelt.

13. Computersystem mit
- Mitteln (138, 147) zum Aufbau einer ersten Verbindung (101) zwischen einem ersten ID-Token (106) über ein zweites Computersystem (100) zum Auslesen zumindest eines ersten Attributs aus dem ersten ID-Token,
- Mitteln (138, 147) zum Aufbau einer zweiten Verbindung (103) zwischen einem zweiten ID-Token (107) über das zweite Computersystem zum Auslesen zumindest eines zweiten Attributs aus dem zweiten ID-Token,
- Mitteln (138, 147) zum Senden der ersten und zweiten Attribute von dem ersten Computersystem an ein drittes Computersystem (150),
- Mitteln (138) zum Empfang der Daten von dem dritten Computersystem,
- Mitteln (138, 147, 151) zum Schreiben der Daten von dem ersten Computersystem in das zweite ID-Token über die zweite Verbindung, um die Daten in dem zweiten ID-Token zu speichern, wobei Voraussetzung für das Schreiben der Daten ist, dass auch die erste Verbindung noch besteht, wobei es sich bei den ersten und zweiten Verbindungen jeweils um Verbindungen mit Ende-zu-Ende-Verschlüsselung und mit einem verbindungsorientierten Protokoll handelt.

14. Computersystem nach Anspruch 13 mit
- Mitteln (138) zum Empfang einer Attributspezifizierung über ein Netzwerk (116), wobei die Attributspezifizierung zumindest ein erstes und/oder zweites Attribut spezifiziert,
- Mitteln (142, 144, 146) zur Authentifizierung gegenüber dem ersten und zweiten ID-Token, wobei das Lesen des ersten bzw. zweiten Attributs voraussetzt, dass sich ein Benutzer zumindest gegenüber dem ersten ID-Token und das Computersystem gegenüber dem ersten und zweiten ID-Token authentifiziert haben.

15. Computersystem nach Anspruch 13 oder 14, wobei die Mittel zum Aufbau der ersten und zweiten Verbindungen so ausgebildet sind, dass die ersten und zweiten Verbindungen gleichzeitig aufrechterhalten werden können.

## Claims

1. A method for storing data, having the following steps:
- establishing a first connection (101) between a first ID token (106) and a first computer system (136) via a second computer system (100) for reading at least one first attribute from the first ID token,
- establishing a second connection (103) between a second ID token (107) and the first computer system via the second computer system for reading at least one second attribute from the second ID token,
- sending the first and the second attributes from the first computer system to a third computer system (150),
- receiving the data from the third computer system by the first computer system,
- writing the data from the first computer system into the second ID token via the second connection in order to store the data in the second ID token, wherein a prerequisite for writing the data is that the first connection also still exists,
wherein the first and the second connection are each connections with end-to-end encryption and with a connection-oriented protocol.

2. The method according to Claim 1, wherein the first and/or the second ID token is a document, in particular a document of value or a security document.

3. The method according to Claim 1 or 2, wherein the connection-oriented protocol is TCP.

4. The method according to Claim 1, 2 or 3, wherein the following steps are performed for establishing each of the first and the second connections:
- a user (102) is authenticated to the respective ID token,
- the first computer system is authenticated to the respective ID token, wherein, following successful authentication of the user and of the first computer system to the respective ID token, the first computer system is granted read access to the at least one first or second attribute stored in the respective ID token for transmission, when said ID token has been signed, to the third computer system.

5. The method according to Claim 4, wherein the first computer system is authenticated to the respective ID token using a certificate (144) of the first computer system, wherein the certificate contains an indication of those attributes stored in the respective ID token for which the first computer system is authorised for the read access,
- wherein in particular the respective ID token checks the read authorisation of the first computer system for the read access to at least the first or second attribute using the certificate,
and/or
- wherein in particular the certificate comprises a specification of the write rights of the first computer system for writing the data into the second ID token, wherein the second ID token checks the write authorization of the first computer system for the write access for writing the data using the certificate.

6. The method according to one of the preceding claims, having the following further steps:
- the at least first or second attribute read from the respective ID token is signed by the first computer system,
- the signed computer system is transmitted from the first computer system to the third computer system.

7. The method according to one of the preceding claims, having the following further steps:
- a service request is sent from the second computer system to the third computer system,
- one or more attributes is/are specified by the third computer system,
- an attribute specification is sent from the third computer system to the first computer system, wherein the first computer system is granted read access to the first or the second ID token in order to read the one or more attributes specified in the attribute specification, wherein in particular the service request contains an identifier for identification of the first computer system in order to select the first computer system for establishing the first and the second connections and for writing the data.

8. The method according to one of the preceding claims, wherein the at least first or second attribute read by the first computer system from the respective ID token is sent to the second computer system, from where it is forwarded to the third computer system following release by the user, wherein in particular the user can add further data to the first or second attribute before forwarding to the third computer system.

9. The method according to one of the preceding claims, wherein the first computer system again accesses the first ID token via the first connection before writing the data in order to read the first attribute again, and wherein the first computer system generates the write data from the first attribute and the data received by the third computer system, which data is then written into the second ID token from the first computer system.

10. The method according to one of the preceding claims, wherein the first ID token is assigned to a user, and wherein the second ID token is assigned to a thing, in particular to a motor vehicle, wherein the second attribute identifies the thing non-ambiguously.

11. A computer program product having instructions which can be executed by a computer system for the purpose of performing a method according to one of the preceding claims.

12. An ID token having
- a protected memory area (124') for storing at least one attribute and for storing data by a service computer system (150), wherein, in order to store the data, a first connection must exist between a first computer system (136) and a first ID token (106) and a first attribute has been read from the first ID token;
- means (134) for authenticating the first computer system (136) to the ID token, means (131') for establishing a second connection (103) between the ID token and the first computer system according to a connection-oriented protocol, via which the first computer system can read at least one second attribute, wherein a necessary prerequisite for the reading of the at least one attribute from the ID token by the first computer system is the successful authentication of the first computer system to the ID token, and wherein the data can be written via the second connection into the memory area, wherein a prerequisite for the writing of the data is that the first connection still exists, and wherein in particular the connection-oriented protocol is TCP, and wherein the ID token is in particular a document, in particular a document of value or a security document.

13. A computer system having
- means (138, 147) for establishing a first connection (101) between a first ID token (106) via a second computer system (100) for reading at least one first attribute from the first ID token,
- means (138, 147) for establishing a second connection (103) between a second ID token (107) via the second computer system for reading at least one second attribute from the second ID token,
- means (138, 147) for sending the first and second attributes from the first computer system to a third computer system (150),
- means (138) for receiving the data from the third computer system,
- means (138, 147, 151) for writing the data from the first computer system into the second ID token via the second connection in order to store the data in the second ID token, wherein a prerequisite for writing the data is that the first connection also still exists, wherein the first and second connections are each connections with end-to-end encryption and with a connection-oriented protocol.

14. The computer system according to claim 13 having
- means (138) for receiving an attribute specification via a network (116), wherein the attribute specification specifies at least one first and/or second attribute,
- means (142, 144, 146) for authenticating to the first and the second ID token, wherein a prerequisite for the reading of the first or second attribute is that a user has authenticated themself at least to the first ID token and that the computer system has authenticated itself to the first and to the second ID token.

15. The computer system according to Claim 13 or 14, wherein the means for establishing the first and second connections are configured to be able to maintain the first and second connections at the same time.

## Revendications

1. Procédé de mémorisation de données avec les étapes suivantes :
- établissement d'une première liaison (101) entre un premier jeton d'identification (106) et un premier système d'ordinateur (136) par l'intermédiaire d'un deuxième système d'ordinateur (100) pour la lecture d'au moins un premier attribut à partir du premier jeton d'identification,
- établissement d'une deuxième liaison (103) entre un deuxième jeton d'identification (107) et le premier système d'ordinateur par l'intermédiaire du deuxième système d'ordinateur pour la lecture d'au moins un deuxième attribut à partir du deuxième jeton d'identification,
- envoi des premier et deuxième attributs par le premier système d'ordinateur vers un troisième système d'ordinateur (150),
- réception des données du troisième système d'ordinateur par le premier système d'ordinateur,
- écriture des données à partir du premier système d'ordinateur vers le deuxième jeton d'identification par l'intermédiaire de la deuxième liaison afin de stocker les données dans le deuxième jeton d'identification, où, pour l'écriture des données, il y a la condition préalable que la première liaison est encore également présente,
où, dans les première et deuxième liaisons, il s'agit chaque fois de liaisons avec un cryptage de bout en bout et avec un protocole orienté en mode connecté.

2. Procédé selon la revendication 1, dans lequel, dans le cas du premier et/ou du deuxième jeton d'identification, il s'agit d'un document, notamment d'un document de valeur ou de sécurité.

3. Procédé selon les revendications 1 ou 2, dans lequel il s'agit d'un TCP dans le cas du protocole orienté en mode connecté.

4. Procédé selon les revendications 1, 2 ou 3, dans lequel, pour la construction de chacune des première et deuxième liaisons, chaque fois les étapes suivantes sont exécutées :
- authentification d'un utilisateur (102) par rapport au jeton d'identification concerné,
- authentification du premier système d'ordinateur par rapport au jeton d'identification concerné, où, après une authentification réussie de l'utilisateur et du premier système d'ordinateur par rapport au jeton d'identification concerné, un accès en lecture du premier système d'ordinateur sur l'au moins un premier, respectivement un deuxième, attribut stocké dans le jeton d'identification concerné est exécuté pour la transmission, après sa signature, vers le troisième système d'ordinateur.

5. Procédé selon la revendication 4, dans lequel l'authentification du premier système d'ordinateur par rapport au jeton d'identification concerné est effectuée à l'aide d'un certificat (144) du premier système d'ordinateur, où le certificat contient une indication des attributs en question stockés dans le jeton d'identification concerné pour lesquels le premier système d'ordinateur est habilité à avoir l'accès en lecture,
- où, notamment le jeton d'identification concerné contrôle l'habilitation du premier système d'ordinateur pour l'accès en lecture sur au moins le premier, respectivement, le deuxième, attribut, à l'aide du certificat, et/ou
- où, notamment, le certificat contient une spécification des droits d'écriture du premier système d'ordinateur pour l'écriture des données dans le deuxième jeton d'identification, où le deuxième jeton d'identification contrôle l'habilitation à l'écriture du premier système d'ordinateur pour l'accès en écriture pour l'écriture des données à l'aide du certificat.

6. Procédé selon l'une des revendications précédentes, avec les autres étapes suivantes :
- dédicace de l'au moins un premier, respectivement, un deuxième, attribut lu à partir du jeton d'identification concerné par le premier système d'ordinateur,
- transmission du système d'ordinateur dédicacé du premier système d'ordinateur vers le troisième système d'ordinateur.

7. Procédé selon l'une des revendications précédentes, avec les autres étapes suivantes :
- émission d'une demande de service du deuxième système d'ordinateur vers le troisième système d'ordinateur,
- spécification d'un ou de plusieurs attributs par le troisième système d'ordinateur,
- émission d'une spécification d'attribut du troisième système d'ordinateur vers le premier système d'ordinateur, où l'accès en lecture du premier système d'ordinateur s'effectue sur le premier, respectivement, le deuxième jeton d'identification, afin de spécifier dans la spécification d'attributs à lire un ou plusieurs attributs, où, notamment la demande de service contient un identificateur pour l'identification du premier système d'ordinateur afin de choisir le premier système d'ordinateur pour la construction des première et deuxième liaisons et l'écriture des données.

8. Procédé selon l'une des revendications précédentes, où l'au moins un premier, respectivement, un deuxième, attribut lu à partir du jeton d'identification concerné par le premier système d'ordinateur est envoyé vers le deuxième système d'ordinateur, d'où il est retransmis vers le troisième système d'ordinateur après une délivrance par l'utilisateur, où notamment l'utilisateur peut compléter par d'autres données l'au moins un premier, respectivement, un deuxième, attribut avant la retransmission vers le troisième système d'ordinateur.

9. Procédé selon l'une des revendications précédentes, dans lequel le premier système d'ordinateur a de nouveau accès au premier jeton d'identification par l'intermédiaire de la première liaison avant l'écriture des données afin de lire à nouveau le premier attribut, et où le premier système d'ordinateur génère les données d'écriture à partir du premier attribut et des données reçues par le troisième système d'ordinateur, lesquelles sont ensuite écrites dans le deuxième jeton d'identification par le premier système d'ordinateur.

10. Procédé selon l'une des revendications précédentes, dans lequel le premier jeton d'identification est associé à un utilisateur et dans lequel le deuxième jeton d'identification est associé à un objet, notamment, un véhicule à moteur, dans lequel le deuxième attribut identifie clairement l'objet.

11. Produit de programme d'ordinateur avec des instructions pouvant être exécutées par un système d'ordinateur pour l'exécution d'un procédé selon l'une des revendications précédentes.

12. Jeton d'identification avec
- un domaine de stockage protégé (124') pour le stockage d'au moins un attribut et pour le stockage de données d'un système d'ordinateur de service (150), où, pour le stockage des données, une première liaison entre un premier système d'ordinateur (136) et un premier jeton d'identification (106) doit être établie et un premier attribut a été lu à partir du premier jeton d'identification ;
- des moyens (134) pour l'authentification du premier système d'ordinateur (136) par rapport au jeton d'identification, des moyens (131') pour l'établissement d'une deuxième liaison (103) entre le jeton d'identification et le premier système d'ordinateur selon un protocole orienté en mode connecté, par lesquels le premier système d'ordinateur peut lire au moins un deuxième attribut, où la condition nécessaire pour la lecture de l'au moins un attribut à partir du jeton d'identification par le premier système d'ordinateur est l'authentification réussie du premier système d'ordinateur par rapport au jeton d'identification et où les données peuvent être écrites par l'intermédiaire de la deuxième liaison dans le domaine de stockage, où, la condition pour l'écriture des données est que la première liaison soit toujours présente et où il s'agit notamment d'un TCP dans le cas du protocole orienté en mode connecté, et où, dans le cas du jeton d'identification, il s'agit d'un document, notamment un document de valeur ou de sécurité.

13. Système d'ordinateur avec
- des moyens (138, 147) pour l'établissement d'une première liaison (101) entre un premier jeton d'identification (106) pour la lecture d'au moins un premier attribut à partir du premier jeton d'identification par l'intermédiaire d'un deuxième système d'ordinateur (100),
- des moyens (138, 147) pour l'établissement d'une deuxième liaison (103) entre un deuxième jeton d'identification (107) pour la lecture d'au moins un deuxième attribut à partir du deuxième jeton d'identification par l'intermédiaire du deuxième système d'ordinateur,
- des moyens (138, 147) pour l'envoi des premier et deuxième attributs du premier système d'ordinateur vers le troisième système d'ordinateur (150),
- des moyens (138) pour la réception des données du troisième système d'ordinateur,
- des moyens (138, 147, 151) pour l'écriture des données du premier système d'ordinateur dans le deuxième jeton d'identification par l'intermédiaire de la deuxième liaison, afin de stocker les données dans le deuxième jeton d'identification, où il y a la condition préalable, pour l'écriture des données, que la première liaison est toujours présente, où, dans le cas des première et deuxième liaisons, il s'agit chaque fois de liaisons avec un cryptage de bout en bout et avec un protocole orienté en mode connecté.

14. Système d'ordinateur selon la revendication 13, avec
- des moyens (138) pour la réception d'une spécification d'attribut par l'intermédiaire d'un réseau (116), où la spécification d'attribut spécifie au moins un premier, et/ou un deuxième attribut,
- des moyens (142, 144, 146) pour l'authentification par rapport aux premier et au deuxième jetons, où la lecture du premier, respectivement, du deuxième attribut, est liée à la condition qu'un utilisateur s'est identifié au moins par rapport au premier jeton d'identification et que le système d'ordinateur est identifié par rapport aux premier et second jetons d'identification.

15. Système d'ordinateur selon les revendications 13 ou 14, dans lequel les moyens pour l'établissement des première et deuxième liaisons sont conçus de telle sorte que les première et deuxième liaisons puissent rester présentes simultanément.
